**Europäisches Patentamt**

**European Patent Office**

**Office européen des brevets**

(19)

(11) Publication number: **0 196 650**

**B1**

(12) # EUROPEAN PATENT SPECIFICATION

(45) Date of publication of patent specification: **17.08.88**

(51) Int. Cl.⁴: **F 16 H 25/06**

(21) Application number: **86104394.1**

(22) Date of filing: **01.04.86**

(54) **Transmitting unit.**

(30) Priority: **01.04.85 CN 85200923**

(43) Date of publication of application:
**08.10.86 Bulletin 86/41**

(45) Publication of the grant of the patent:
**17.08.88 Bulletin 88/33**

(84) Designated Contracting States:
**AT DE FR GB IT**

(56) References cited:
**DE-A-1 775 800**
**DE-A-2 310 751**
**DE-C- 341 053**
**DE-C- 348 634**
**FR-A-2 101 980**
**US-A-3 468 175**

(73) Proprietor: **Hubei Institute of Machinery**
**Shipailing**
**Hongshan Wuhan (CN)**

(72) Inventor: **Ren, Zhu Shao**
**Hubei Institute of Machinery**
**Shipailing Hongshan Wuhan (CN)**

(74) Representative: **Liesegang, Roland, Dr.-Ing.**
**FORRESTER & BOEHMERT Widenmayerstrasse**
**4 Postfach 22 01 37**
**D-8000 München 22 (DE)**

Courier Press, Leamington Spa, England.

## Description

This invention relates to a mechanical transmitting unit comprising an input shaft and an output shaft disposed in the same axial line. Such a transmitting unit can be used to reduce or to increase the rotational speed in both directions, i.e. clockwise or counterclockwise. More specifically the invention relates to a transmitting unit as described in the precharacterizing portion of claim 1.

In order to realize a coaxial transmitting unit with a fixed transmission ratio, especially a transmitting unit with a relatively large single stage transmission ratio, it is generally known to make use of an epicyclic gearing mechanism having a fixed transmission ratio. In an ordinary epicyclic gearing mechanism, the design is limited by the conditions of transmission ratio, concentricity, assembling, adjacency, and efficiency of the transmission.

In order to overcome the disadvantages of ordinary epicyclic gearing, an epicyclic gearing of cycloid needle type was produced; however, such a gearing requires special output mechanism, high precision work and thus it is inconvenient in maintenance and repairing work. Moreover, the bearing of the epicyclic gear is under high stress and owing to the limitation in design structure, larger bearings cannot be used.

In another known transmitting unit of the kind mentioned in the precharacterizing portion of claim 1 (US—A—3468175) a relatively large single stage transmission ratio is achieved without the usual epicyclic gearing mechanism. In this known construction there still exist the following problems: transmission efficiency is low; heat is easily produced at the contact locations between the teeth profile or cams and the rolling member and also between the rolling member and the internal gear race; the guide grooves suffer early wear; the roller member and the internal gear race easily produce heat during their meshing; etc. The main causes of those problems are that the linear speed of the meshing contact of the high speed cam and of the rolling members on the transmitting race is too high, and that the rolling member and the guide groove in a radial direction of the transmitting race are in direct contact. When the rolling member is in radial motion at remote center position, there is some displacement of the contact position of the rolling member and the guide groove and also some displacement of the contact position of the rolling member and the internal gear race. If the relative motion between the rolling member and the guide groove is pure rolling, then the rolling member should rotate in clockwise direction. If the relative motion between the rolling member and the internal gear race is pure rolling, then the rolling member should rotate in counterclockwise direction. Of course, the same rolling member cannot simultaneously rotate clockwisely and counterclockwisely, thus the rolling member can be neither in normal rolling nor in normal sliding status.

The objects of this invention are to provide a transmitting unit with a relatively large single stage transmission ratio without making use of the common epicyclic gearing mechanism and at the same time to overcome the problems of overheating in operation and early wear of the guide grooves, so as to increase transmission efficiency and life time of the transmitting unit. The unit should be assembled like a usual rolling bearing, i.e. transmission bearing. Thus, the unit should offer a series of standard parts to replace conventional transmission boxes.

These and other objects are accomplished by the measures specified in claim 1.

According to this invention, two rolling bearings can be installed on a dual eccentric sleeve to cooperate with the rolling member on the transmitting rod, so as to separate from the high speed rotation of the dual eccentric sleeve; the two ends of each transmitting rod enclose the rolling members to such an extent that the covered length equals the rolling member radius or exceeds this length so that there is no direct contact between the rolling member and the guide groove of the transmitting race; the transmitting rod and the guide groove are in surface contact and thus the problem of early wear of the transmitting race is overcome. Owing to the fact that the transmitting rod carrying the rolling members only moves in radial direction with respect to its guide groove this does not affect the rolling motion during meshing contact of the rolling member with the teeth profile of the internal gear race, pure rolling is guaranteed when the rolling member is in meshing motion. The transmitting race is coaxial with the dual eccentric sleeve, hence enough space is provided for replacing the rolling bearing on the dual eccentric sleeve with a larger one. The outside shape of the whole body is similar to that of a usual rolling bearing and can be installed directly into the main machine. No transmission cases or boxes are required.

Thus, the usual epicyclic gearing mechanism is replaced by a simple structure of a coaxial transmitting unit for transmitting speeds and torques with a large fixed transmission ratio in a single stage.

A preferred embodiment of the invention is described in the following at hand of the accompanying drawings, in which

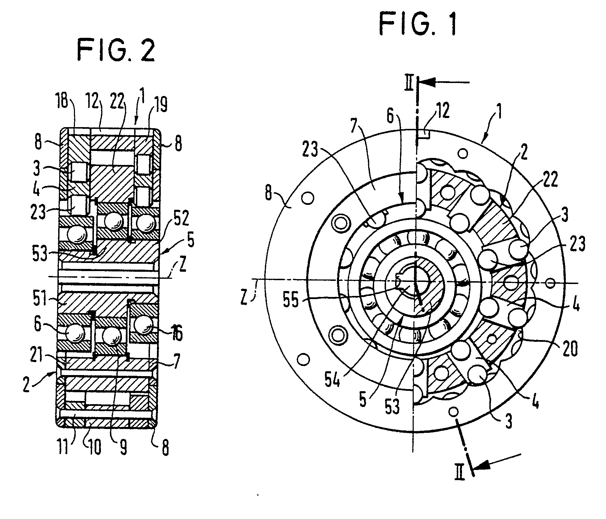

Fig. 1 is a front view, partly in cross section and

Fig. 2 is a section along line II—II.

The main parts of the transmitting unit are formed by an annular internal gear race 1, an annular transmitting race 2 and a dual eccentric sleeve 5. The internal gear race 1 comprises two gear race rings 18, 19 and an intermediate spacer ring 10. At the inner periphery of the gear race rings 18, 19 teeth or cams 20 are formed. Two cover plates 8 cover the outer side surfaces of the gear race rings 18, 19, and the above described parts are held together by rivets 11.

The transmitting race 2 comprises a transmitting ring body 21 which has a centre portion 22 and two rows of radial equidistant disposed guide grooves, one row being arranged to face the teeth or cams 20 of ring 18 and the other row being arranged to face the teeth 20 of ring 19. Each guide groove accommodates a transmitting rod 4, each end of which encloses a rolling member 3, 23, respectively, to such an excent that the covering length is equal to or exceeds the radius of the rolling members 3, 23. Outer rolling members 3 are in meshing contact with the teeth 20, whereas the inner rolling members 23 are in rolling contact with the outer race of a ball bearing 6 or 16, respectively.

The ball bearings 6, 16 have similar dimensions and are mounted on eccentric portions 51, 52, respectively at both ends of the eccentric sleeve 5, a middle portion 53 of which is in axial alignment with axis Z of the sleeve 5 and the transmitting race 2. The two eccentric portions 51, 52 have an eccentricity, which is equal but offset 180° and the same is true for the eccentricity of base circles of the teeth of the rings 18, 19 with respect to the axis Z. The middle portion 53 of the dual eccentric sleeve 5 carries a ball bearing 9, the outer race of which supports the centre portion 22 of transmitting race 2.

Cover plates 7 are riveted to both sides of transmitting race 2 to guarantee in combination with cover plates 8 that there is only radial motion and no axial displacement of the transmitting rods 4 and rolling members 3, 23.

Ball bearings 6, 16 avoid direct contact of the inner rolling members 23 with the dual eccentric sleeve 5 and provide for a pure rolling movement between inner roller members 23 and outer races of bearings 6, 16.

The dual eccentric sleeve 5 has a centre bore 54 having a keyway 55 for mounting a rotatable shaft (not shown) for common rotating movement. Moreover a keyway 12 is provided at the outer periphery of internal gear race 1 for connection to a stationary housing or the like.

The transmitting unit as described has the shape of an ordinary rolling bearing, the external diameter of which corresponds to the external diameter of the internal gear race 1. The dimensions of the unit can be the same of those of standard series rolling bearings or may be different therefrom.

The transmission theory of the transmitting unit of this invention is described as follows: when internal gear 1 race is stationary and the dual eccentric sleeve 5 is driven with high speed, then the transmitting rods 4 and the rolling members 3, 23 are subjected to radial motion in the guide groove of transmitting race 2, and the rolling members 3 also roll along the teeth 20 profiled at the internal gear 1. This has the result that the transmitting race 2 is rotated at low speed. If according to the theory of relative motion, any one of the three components—internal gear race 1, transmitting race 2, and dual eccentric sleeve 5—is stationary, then the other two will be driving and driven parts, and one transmitting unit as described can realize a speed or torque transmission of three speed ratios for speed reduction and three speed ratios for speed increase.

The number of radial guide grooves at each side of transmitting race 2 is equal to the number of teeth 20 of internal gear race ±1 divided by a positive integer. Let the number of teeth of internal gear race 1 be za, then the maximum number of transmitting rods 4 is Zbmax=Za±1. The transmitting ratios of reduction of speed are as follows:

If internal gear race is stationary, then

$$i=\pm Zbmax=\pm(Za\pm1)$$

If the transmitting race is stationary, then

$$i=\pm Za$$

If the dual eccentric sleeve is stationary, then

$$i=\frac{Za+1}{Za}$$

(when Zbmax=Za+1)

$$i=\frac{Za}{Za-1}$$

(when Zbmax=Za−1)

In case of increasing the speed, the speed ratios are the reciprocals of the values given above.

The number of teeth 20 of each row of the internal gear race 1 is an odd number, from 5 to 69, and thus a wide range of speed ratios may be obtained for the single stage in reducing or increasing speed transmission.

A theoretical teeth or cam profile according to the generating manufacturing process is used to make the teeth 20 of the internal gear race 1.

Except for the cases of the transmission of very small power and low requirements in transmission, in the axial direction of internal gear race 1 there are provided at the inner periphery two gear race rings 18, 19 and staggered 180°, the dual eccentric sleeve 5 being correspondingly staggered 180°. The transmitting race 2 has two sets of rows of guide grooves in the axial direction and their positions are corresponding to those of internal gear race 1 and dual eccentric sleeve 5, so that the stress is balanced at any instant and thus stable transmission is achieved. At the same time, loading action line of the bearings 6, 16, 9 on the dual eccentric sleeve 5 is not static; and this is favourable for increasing the working life of the bearings. Keyway 12 on the outer periphery of internal gear race 1 serves for connection and transmission as mentioned. According to different power transmission conditions a single key, double key, spline, etc. may be used which is conventional standard. Also drill holes or threaded holes may be drilled in the end faces of the internal gear race 1 for connection and transmission.

On the end face of the transmitting race 2, there is provided a hole or a threaded hole for connection and transmission. The radial guide grooves together with the cover plates 7, 8 form hollow spaces which are suitable for accommodating the transmitting rods 4 to perform radial motion only and no rotation. The cross-section profiles of the transmitting rods and the guide grooves should be basically identical. The profiles may be selected at random; but the rectangular cross-section is preferred. The transmitting rods and the guide grooves of the transmitting race are in surface contact and thus, very heavy loads can be carried. Rolling members (not shown) such as rolling needles, etc. can also be placed between the rods and the guide grooves to reduce friction. The transmitting race 2 and the cover plates 7 may also be made in a one-piece structure. One lateral side of the groove is open. The transmitting race 2 and the centre bore 54 of the dual eccentric sleeve 5 are coaxial and therefore there is enough space for a larger rolling bearing 9 to be mounted on the dual eccentric sleeve 5 and thus eliminating weak link which exists in known transmitting units of the epicyclic type.

The ends of transmitting rod 4 enclose the rolling members 3, 23 to such an extent that the covering length equals radius of rolling member or exceeds it. The exceeding part is the plain surface which extends tangentially to the cylindrical surface; this favors the machining work of the transmitting rod 4 because a separate structure of transmitting rods 4 and rolling members 3, 23 is provided. It is also possible to provide a flexible link and thus inaccurance in machining is not sensitive, and therefore the production cost of a unit according to this invention may be decreased.

The minimum angle between adjacent guide grooves of the transmitting race 2 is equal to 360° divided by the number of teeth 20 of internal gear race ±1. This angle may be the integral multiple of the minimum inclined angle. If the suitable number of guide grooves during the designing is selected properly more meshing points as well as sufficient strength of transmitting race may be achieved.

The rolling members 3, 23 may be rollers or balls of a standard rolling bearing.

Instead of the keyway 55 in the centre bore 54 of the dual eccentric sleeve 5 single key, double key or splines may be provided to meet different requirements in power transmissions and types of connections.

In the preferred embodiment of this invention, only the eccentric sleeve 5 is a high speed rotating part which is of small mass. Moreover, the ball bearings 6, 16 separate the high speed rotating dual eccentric sleeve 5 from other parts. Thus, the inner rolling members 23 have low rotational speed, and all other rotating parts as well have low linear speed. Therefore a stable and low noise transmission can be obtained. When the unit is used for increasing the speed, a larger multiple of increasing speeds may be achieved without any difficulties as regards dynamic balancing.

When the transmitting unit of this invention is used for reducing or increasing the speed, the whole transmitting unit can be put directly into the main machine and the use of a particular transmission case or box is not required. It is only necessary to provide an installation hole at the main machine; thus the layout design of the main machine is convenient. This also makes the structure simple and shortens the transmission chain. As a result, many high speed rotating parts in the main machine are eliminated, and its performance is improved. Moreover, through exchange of the transmitting unit or bearing, the specifications of the main machine may be changed, without any change in the structure of the main machine to suit the different demands of the products processed by this main machine or other changes in function.

The application and manufacture of the transmitting unit of this invention as a standard part offers the possibility to substitute different kinds of transmission cases which are now widely used in many areas.

If the transmitting unit is installed at an ordinary machine base and input and output shafts are added having keyways, holes or threaded holes for the purposes of connection and transmission, then a variable speed transmitting unit with an external shape of horizontal or vertical type is formed. Moreover the unit can be directly connected with a d.c. or an a.c. motor. Therefore this kind of variable speed transmitting unit can be used in the areas where transmissions having fixed speed or torque ratios are used such as in food and chemical industries, light industry, construction, mining, textile and dyeing industries.

The transmission efficiency of a produced transmitting unit reducing the speed is 90—94%, and of a transmitting unit used for increasing the speed is somewhat lower by 20% to 4%.

**Claims**

1. A transmitting unit of fixed speed transmission ratio comprising an eccentric mechanism (5), an internal gear rate (1, 18) and a transmitting race (2) disposed between the internal gear race and the eccentric mechanism (5), one of these elements being connected to a rotatable input shaft, a second one being stationary and a third one being connected to a rotatable output shaft, wherein said transmitting race (2) contains a set of radial guide grooves equidistantly disposed about the periphery of the transmitting race and transmitting rods (4) are housed in the guide grooves and inner and outer rolling members (3; 23) are arranged at the ends of the transmitting rods (4), the outer rolling members (3) cooperating with teeth formed at the internal gear race and the inner rolling members (23) cooperating with a surface of the eccentric mechanism, respectively, and the number of said transmitting rods (4) is different from the number of said teeth (20), characterized in that the two ends of the transmitting rods (4) enclose the rolling members (3; 23) to such an extent that the covering length is equal to or exceeds the radius of the rolling members (3; 23); and in that two rolling bearings (6, 16; 9) are mounted on an eccentric sleeve (5), which forms the eccentric mechanism, wherein the first rolling bearing (6, 16) is mounted on an eccentric portion (51, 52) of the eccentric sleeve (5) and cooperates with the inner rolling members (23) and wherein the second rolling bearing (9) is mounted on a portion (53) of the eccentric sleeve (5), which is coaxial with the centre bore (54) of the eccentric sleeve (5) and supports the transmitting race (2).

2. A transmitting unit according to claim 1, characterized in that a keyway (12) is provided at the outer periphery of the internal gear race (1), and/or at least one hole or threaded hole is provided in the radial end face of the internal gear race (1) for connection to a stationary housing, the output shaft or the input shaft, respectively.

3. A transmitting unit according to claim 1 or 2, characterized in that a hole or threaded hole is provided on the radial end face of the transmitting race (2) for connection to the output shaft, the input shaft, or the stationary housing, respectively.

4. A transmitting unit according to one of the claims 1 to 3, characterized in that the number of radial guide grooves is equal to the number of teeth (20) formed at internal gear race plus 1 divided by a positive integer.

5. A transmitting unit according to one of the claims 1 to 4, characterized in that a further internal gear race (1, 19) is arranged at the other side of the unit and connected to the said internal gear race (1, 18), that the transmitting race (2) contains a further set of radial guide grooves equidistantly disposed about the periphery of the transmitting race, transmitting rods (4) being housed in each guide groove and rolling members (3, 23) being disposed at each end of the transmitting rod (4), that the inner rolling members (23) in the further radial guide grooves cooperate with an outer race of a third rolling bearing (16) arranged on a further eccentric portion (52) of the eccentric sleeve (5) and that the eccentricity of the further eccentric portion (52) is of the same value but angularly offset 180° with respect to the eccentricity of the said eccentric portion of the eccentric sleeve (5).

6. A transmitting unit according to one of the claims 1 to 5, characterized in that the transmitting race (2) and the or each internal gear race are covered by cover plates (7, 8) at both sides, and that the transmitting race (2) and the corresponding cover plates (7), respectively and also the or each internal gear race and the corresponding cover plates (8), respectively, are connected by axial connecting means, e.g. rivets, to form a single unit having an outside shape and being mountable similar to a usual rolling bearing.

7. A transmitting unit according to claim 5 or 6, characterized in that a spacer ring (10) is inserted between the internal gear races (1, 18 and 1, 19).

8. A transmitting unit according to one of the preceding claims, characterized in that rolling members are installed between the guide grooves and the transmitting rods.

9. A transmitting unit according to one of the preceding claims, characterized in that one lateral side of the guide groove is open.

**Patentansprüche**

1. Getriebe mit fester Unter- bzw. Übersetzung mit einem Exzentermechanismus (5), einem innenverzahnten Laufkranz (1, 18) und einem zwischen dem innenverzahnten Laufkranz und dem Exzentermechanismus (5) angeordneten Übertragungslaufkranz (2), wobei eines dieser Bauelemente mit einer Antriebswelle verbunden ist, ein zweites Bauelement fest steht und ein drittes Bauelement mit einer Abtriebswelle verbunden ist, wobei der Übertragungslaufkranz (2) einen Satz radiale Führungsnuten enthält, die äquidistant um den Umfang des Übertragungslaufkranzes verteilt angeordnet sind und Übertragungszapfen (4) sowie innere und äußere Wälzkörper (3; 23) an den Enden der Übertragungszapfen (4) enthalten, wobei die äußeren Wälzkörper (3) mit den Zähnen der innenverzahnten Laufbahn zusammenwirken, während die inneren Wälzkörper (23) mit einer Oberfläche des Exzentermechanismus zusammenwirken, und wobei die Anzahl der Übertragungszapfen (4) von der Anzahl der Zähne (20) abweicht, dadurch gekennzeichnet, daß die beiden Enden der Übertragungszapfen (4) die Wälzkörper (3; 23) derart einschließen, daß die Überdeckungslänge gleich oder größer dem Radius der Wälzkörper (3; 23) ist, und daß zwei Wälzlager (6, 16; 9) auf einer Exzenterhülse (5) sitzen, welche den Exzentermechanismus bildet, wobei das erste Wälzlager (6, 16) auf einem Exzenterabschnitt (51, 52) der Exzenterhülse (5) sitzt und mit den inneren Wälzkörpern (23) zusammenwirkt, während das zweite Wälzlager (9) auf einem mit der Mittelbohrung (54) der Exzenterhülse (5) koaxialen und den Übertragungslaufkranz (2) lagernden Abschnitt (53) der Exzenterhülse (5) sitzt.

2. Getriebe nach Anspruch 1, dadurch gekennzeichnet, daß eine Keilnut (12) am äußeren Umfang des innenverzahnten Laufkranzes (1) und/oder mindestens ein Loch oder Gewindeloch in der radialen Stirnfläche des innenverzahnten Laufkranzes (1) zur Verbindung mit einem stationären Gehäuse, der Abtriebswelle oder der Antriebswelle vorgesehen sind.

3. Getriebe nach Anspruch 1 oder 2, dadurch gekennzeichnet, daß ein Loch oder Gewindeloch an der radialen Stirnfläche des Übertragungslaufkranzes (2) zur Verbindung mit der Abtriebswelle, der Antriebswelle oder dem stationären Gehäuse vorgesehen ist.

4. Getriebe nach einem der Ansprüche 1 bis 3, dadurch gekennzeichnet, daß die Anzahl der radialen Führungsnuten gleich der Anzahl der Zähne (20), welche am innenverzahnten Laufkranz ausgebildet sind, plus 1 geteilt durch eine positive ganze Zahl ist.

5. Getriebe nach einem der Ansprüche 1 bis 4, dadurch gekennzeichnet, daß ein weiterer innenverzahnter Laufkranz (1, 19) auf der anderen Seite der Baueinheit angeordnet und mit dem innenverzahnten Laufkranz (1, 18) verbunden ist, das der Übertragungslaufkranz (2) einen weiteren Satz radiale Führungsnuten, die äquidistant um den Umfang des Übertragungslaufkranzes verteilt sind, und Übertragungszapfen (4) in jeder Führungsnut mit Wälzkörpern (3, 23) an deren beiden Enden aufweist, und daß die inneren Wälzkörper (23) in den weiteren radialen Führungsnuten mit einer äußeren Laufbahn eines dritten Wälzlagers (16) zusammenwirken, welches auf einem weiteren Exzenterabschnitt (52) der Exzenterhülse (5) sitzt, wobei die Exzentrizität des weiteren Exzenterabschnittes (52) den gleichen Betrag wie die Exzentrizität des besagten Exzenterabschnittes der Exzenterhülse (5) hat, demgegenüber jedoch um 180° versetzt ist.

6. Getriebe nach einem der Ansprüche 1 bis 5, dadurch gekennzeichnet, daß der Übertragungslaufkranz (2) und der oder die innenverzahnten Laufkränze von Deckelplatten (7, 8) beidseitig abgedeckt sind und daß der Übertragungslaufkranz (2) und die entsprechenden Deckelplatten (7) sowie ferner der oder die innenverzahnten Laufkränze und die entsprechenden Deckelplatten (8) durch axiale Verbindungsmittel, z.B. Nieten, verbunden sind, um eine Baueinheit mit einer äußeren Gestalt und Montagemöglichkeit ähnlich einem gewöhnlichen Wälzlager zu bilden.

7. Getriebe nach Anspruch 5 oder 6, dadurch gekennzeichnet, daß ein Abstandsring (10) zwischen die innenverzahnten Laufkränze (1, 18) und (1, 19) eingebaut ist.

8. Getriebe nach einem der vorangehenden Ansprüche dadurch gekennzeichnet, daß Wälzkörper zwischen den Führungsnuten und den Übertragungszapfen angeordnet sind.

9. Getriebe nach einem der vorangehenden Ansprüche, dadurch gekennzeichnet, daß eine Seite jeder Führungsnut offen ist.

**Revendications**

1. Ensemble de transmission d'un rapport fixe de transmission comprenant un mécanisme excentrique (5), un chemin d'engrenage interne (1, 18) et un chemin de transmission (2) disposé entre le chemin d'engrenage interne et le mécanisme excentrique (5), l'un de ces éléments étant connecté à un arbre rotatif d'entrée, un second étant stationnaire et un troisième étant connecté à un arbre rotatif de sortie, où ledit chemin de transmission (2) contient un groupe de gorges radiales de guidage qui sont disposées de manière équidistante sur le pourtour du chemin de transmission et des tiges de transmission (4) sont abritées dans les gorges de guidage et des éléments roulants internes et externes (3; 23) sont agencés aux extrémités des tiges de transmission (4), les éléments roulants externes (3) coopérant avec des dents formées sur le chemin d'engrenage interne et les éléments roulants internes (23) coopérant avec une surface du mécanisme excentrique respectivement, et le nombre desdites tiges de transmission (4) est différent du nombre desdites dents (20), caractérisé en ce que les deux extrémités des tiges de transmission (4) renferment les éléments roulants (3; 23) au point que la longueur de recouvrement soit égale à ou dépasse le rayon des éléments roulants (3; 23) et en ce que deux paliers à roulement (6, 16; 9) sont montés sur le manchon excentrique (5), qui forme le mécanisme excentrique, où le premier palier à roulement (6, 16) est monté sur une portion excentrique (51, 52) du manchon excentrique (5) et coopère avec les éléments roulants internes (23) et où le second palier à roulement (9) est monté sur une portion (53) du manchon excentrique (5), qui est coaxial avec le perçage central (54) du manchon excentrique (5) et supporte le chemin de transmission (2).

2. Ensemble de transmission selon la revendication 1, caractérisé en ce qu'une rainure de clavette (12) est prévue sur le pourtour externe du chemin d'engrenage interne (1) et au moins un trou ou trou fileté est prévu dans la face extrême radiale du chemin interne d'engrenage (1) pour connexion à un logement stationnaire, l'arbre de sortie ou l'arbre d'entrée, respectivement.

3. Ensemble de transmission selon la revendication 1 ou 2, caractérisé en ce qu'un trou ou trou fileté est prévu sur la face extrême radiale de chemin de transmission (2) pour connexion à l'arbre de sortie, à l'arbre d'entrée ou au logement stationnaire respectivement.

4. Ensemble de transmission selon l'une quelconque des revendications 1 à 3, caractérisé en ce que le nombre des gorges radiales de guidage est égal au nombre des dents (20) formées sur le chemin d'engrenage interne plus 1 divisé par un nombre positif.

5. Ensemble de transmission selon l'une des revendications 1 à 4, caractérisé en ce qu'un autre chemin d'engrenage interne (1, 19) est agencé de l'autre côté de l'ensemble et connecté audit chemin d'engrenage interne (1, 18), en ce que le chemin de transmission (2) contient un autre groupe de gorges radiales de guidage disposées de manière équidistante sur le pourtour du chemin de transmission, des tiges de transmission (4) étant abritées dans chaque gorge de guidage et des éléments roulants (3, 23) étant disposés à chaque extrémité de la tige de transmission (4), en ce que les éléments roulants internes (23) dans les secondes autres gorges radiales de guidage coopèrent avec un chemin externe d'un troisième palier à roulement (16) agencé sur une autre portion excentrique (52) du manchon excentrique (5) et en ce que l'excentricité de l'autre portion excentrique (52) est de la même valeur et angulairement décalée de 180° par rapport à l'excentricité de ladite portion excentrique du manchon excentrique (5).

6. Ensemble de transmission selon l'une des revendications 1 à 5, caractérisé en ce que le chemin de transmission (2) et le ou chaque chemin d'engrenage interne sont couverts de plaques de recouvrement (7, 8) des deux côtés et en ce que le chemin de transmission (2) et les plaques correspondantes de recouvrement (7) respectivement, et également le ou chaque chemin d'engrenage interne et les plaques correspondantes de recouvrement (8) respectivement sont connectés par des moyens axiaux de connexion, tels que des rivets, pour former un seul ensemble ayant une forme externe et pouvant être monté comme un palier à roulement usuel.

7. Ensemble de transmission selon la revendication 5 ou 6, caractérisé en ce qu'une bague d'espacement (10) est insérée entre les deux chemins d'engrenage interne (1, 18 et 1, 19).

8. Ensemble de transmission selon l'une des revendications précédentes, caractérisé en ce que des éléments roulants sont installés entre les gorges de guidage et les tiges de transmission.

9. Ensemble de transmission selon l'une des revendications précédentes, caractérisé en ce qu'un côté latéral de la gorge de guidage est ouvert.

0 196 650

FIG. 2

FIG. 1